# EUROPÄISCHE PATENTSCHRIFT

(11) **EP 0 839 567 B1**
(45) Veröffentlichungstag und Bekanntmachung des Hinweises auf die Patenterteilung: **17.03.2004**
(21) Anmeldenummer: 97116594.9
(22) Anmeldetag: 24.09.1997
(51) Int. Cl.: B01D 51/04, C23G 1/36

(54) **Verfahren und Anlage zur Abscheidung feinster Oxidteilchen**
Process and apparatus for separating very fine oxide particles
Procédé et dispositif pour la séparation de particules très fines d'oxyde

(30) Priorität: 30.10.1996 AT 188996
(43) Veröffentlichungstag der Anmeldung: 06.05.1998
(73) Patentinhaber: Andritz AG, 8045 Graz (AT)
(72) Erfinder: Lebl, Albert, Dr., 1170 Wien (AT)
(74) Vertreter: Schweinzer, Friedrich

(56) Entgegenhaltungen:
- EP-A- 0 800 851
- BE-A- 695 091
- DE-A- 4 405 010
- US-A- 3 894 851
- US-A- 5 370 720

## Beschreibung

Die Erfindung betrifft ein Verfahren zur Abscheidung feinster Oxidteilchen bei der Regeneration von verbrauchten Beizsäuren mittels Pyrolyse, wobei im Abgasstrom eine Tropfenabscheidung vorgesehen ist und vor der Tropfenabscheidung eine Eindüsung von Wassertropfen und eine Anlagerung der Oxidteilchen an die Wassertropfen erfolgt wobei die Oxidteilchen gemeinsam mit den Wassertropfen abgeschieden werden.

Bei bei der Regeneration von Beizsäure und der damit verbundenen Oxidherstellung mittels Pyrolyse z.B. Sprührösten oder Fließbett werden immer feinste Oxidteilchen als Staub im Abgas mit ausgetragen. Die durchschnittliche Staubemission im Abgas der Regenerationsanlage liegt dabei derzeit über den behördlich zugelassenen Werten. In der US 3 894 851 wird eine Möglichkeit der Abtrennung von großen und kleinen Feststoffteilchen mittels Einsprühen von Wasser und anschließendem Dampfeinsprühen dargestellt, wobei die großen Feststoffteilchen in einem Zyklon abgeschieden werden. In der BE 695 091 wird eine Säureregeneration einer Beizanlage beschrieben, bei dem die großen Feststoffteilchen in einem Zyklon abgeschieden werden. Die kleineren Oxidteilchen werden jedoch trotzdem noch mitgerissen und erst beim Durchgang des Gasstromes durch das Säurebad in der Säure abgeschieden und reichern sich somit im Kreislauf an.

Ziel der Erfindung ist es daher, die Staubemission im Abgas bei gleichbleibender Oxidqualität soweit zu reduzieren, daß die behördlichen Werte unterschritten werden.

Dies erfolgt erfindungsgemäß dadurch, daß die Wassertropfen eine Größe von kleiner 0,01 mm aufweisen und die Verweilzeit der Wassertropfen im Abgas mehr als 0,5 Sekunden, vorzugsweise mehr als 1 Sekunde beträgt. Damit können auch die kleinsten Staubteilchen im Mikrometerbereich gut abgeschieden werden.

Weiters betrifft die Erfindung ein Anlage zur Abscheidung feinster Oxidteilchen bei der Regeneration von verbrauchten Beizsäuren, wobei nach einer Kolonne eine Abgasleitung vorgesehen ist, die einen Tropfenabscheider aufweist, die dadurch gekennzeichnet ist, daß vor dem Tropfenabscheider eine Düse zur Eindüsung von Wassertropfen vorgesehen ist und die Düse als Zweistoffdüse ausgebildet ist. Mit der Eindüsung von

Wasser können die feinen Staubteilchen gebunden werden, wobei mit einer Zweistoffdüse kleiner Tropfen erzeugt werden können, die in weiterer Folge auch kleinere Staubteilchen abscheiden können.

Eine vorteilhafte Weiterbildung der Erfindung ist dadurch gekennzeichnet, daß der Tropfenabscheider ein Venturiwäscher, eine Füllkörperkolonne oder ein alkalischer Füllkörperwäscher ist. Mit diesen Tropfenabscheidern lassen sich am günstigsten die vorhandenen Tropfen, die mit Staubteilchen beladen sind, abscheiden.

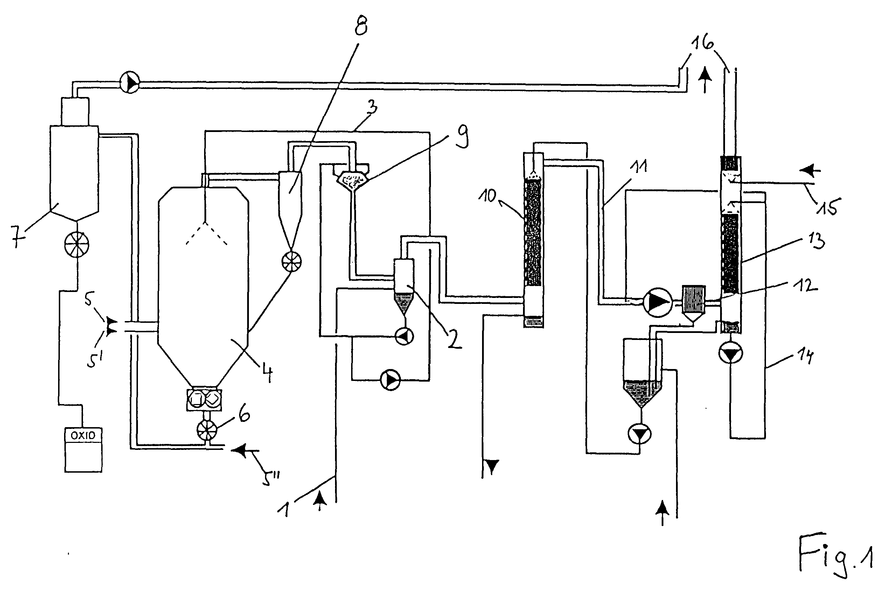

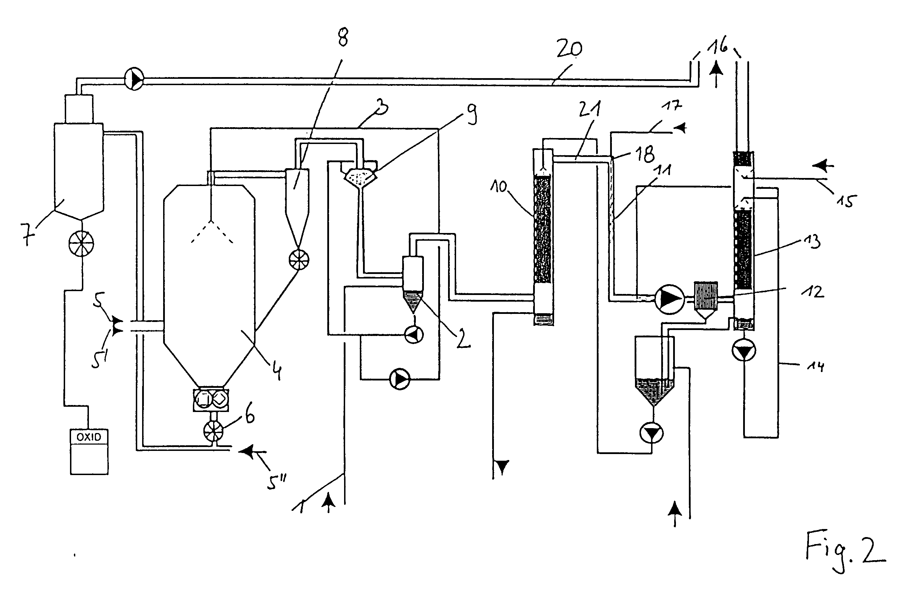

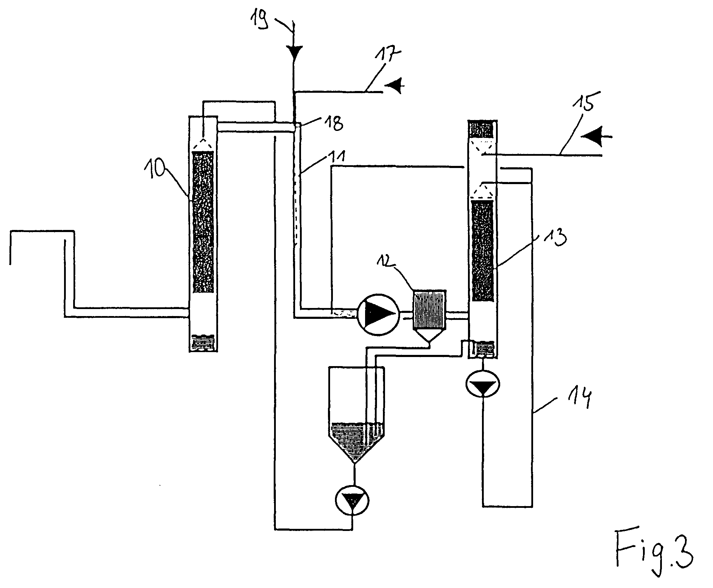

Die Erfindung wird im folgenden anhand der Zeichnungen beispielhaft erläutert, wobei Fig. 1 eine Regenerationsanlage nach dem Stand der Technik, Fig. 2 eine Regenerationsanlage nach der Erfindung und Fig. 3 einen Ausschnitt aus Fig. 2 darstellt.

Die Fig. 1 stellt eine HCl-Regenerationsanlage gemäß dem Stand der Technik dar. Die Abbeize wird bei 1 in die Regenerationsanlage eingebracht und einem Behälter 2 zugeführt. Ein Großteil der Säuremenge des Behälters 2 wird über eine Leitung 3 dem Pyrolysereaktor 4, der hier als Sprühröstreaktor ausgebildet ist, über eine Düse aufgegeben, wobei weiters Gas 5 und Luft 6 zur Verbrennung bzw. Oxidation der Säure zugeführt wird. Die Oxidteilchen werden durch die Zellenradschleuse 6 ausgetragen und mittels Luft 5' in einen Speicherbehälter 7 geleitet. Das im Pyrolysereaktor 4 entstandene Abgas wird über einen Zyklon 8 zur Feinstoffabscheidung einem Venturiwäscher 9 zugeführt. Von dort wird das Gas-/Flüssigkeitsgemisch in eine Kolonne 10 zur weiteren Reaktion und

Abscheidung zugeführt. Das flüssige Regenerat wird aus der Kolonne 10 abgeführt und das Gas über eine Leitung 11 und einen Wärmetauscher 12 dem Tropfenabscheider 13, der als Füllkörperkolonne ausgebildet ist, zugeführt. Die dort vorhandene Flüssigkeit wird zur besseren Tropfenniederschlagung über Leitung 14 umgepumpt. Zusätzlich wird Frischwasser 15 eingedüst. Das teilweise mit Staubteilchen belastete Abgas wird bei 16 an die Umgebung abgegeben. Zusätzlich wird Frischwasser 15 eingedüst. Das teilweise mit Staubteilchen belastete Abgas wird bei 16 an die Umgebung abgegeben.

Im Pyrolysereaktor 4 enstehen Oxidstäube. Die Abgase reißen die feinsten Staubteilchen, die teilweise eine Größenordnung von Mikrometer haben, mit. Durch die Feinheit der Teilchen können diese im Venturiwäscher 9 und auch in den nachfolgenden Kolonnen 10 und 13 nicht ausreichend abgeschieden werden, so daß noch eine große Menge im Abgas 16 enthalten ist.

Fig. 2 zeigt nun eine Anlage gemäß der Erfindung. Um die große Menge an feinsten Staubteilchen im Abgas zu reduzieren wird nach der Kolonne 10 in die Leitung 11 Frischwasser 17 über eine Düse 18 eingedüst. Mit einer Zweistoffdüse 18 können hier Tropfengrößen von ca. 0,01 mm Durchmesser erzielt werden. Durch die Vergrößerung der Aerosolteilchen von < 0,001 mm durch Anlagerung der Staubteilchen an Flüssigkeitstropfen von 0,01 mm ist es nun möglich, diese dann im Tropfenabscheider 13 abzuscheiden. Die zur Abscheidung erforderliche Verweilzeit von 0,5 bis 1 Sekunde läßt sich bei einer Strömungsgeschwindigkeit im Rohr von ca. 10 m/s in der Leitung 11, die üblicherweise eine Länge von bis zu 10 m aufweist, leicht realisieren.

Fig. 3 zeigt den Ausschnitt aus Fig. 2, mit der Kolonne 10, der Leitung 11, dem Tropfenabscheider 13 sowie der Frischwasserzufuhr 17 und der Zweistoffdüse 18, der zusätzlich durch die Leitung 19 Druckluft zugeführt wird.

### Beispiele:

Es wurden mehrere Vergleichsversuche in einer Anlage durchgeführt, wobei im wesentlichen der Luftüberschuß variiert wurde. Bei einer Zufuhr von ca. 9 m³/h Beize zum Venturiwäscher 9 und einer Aufgabe von ca. 6 m³/h Beizkonzentrat zum Sprühröstreaktor 4 ergaben sich bei einer Abgasmenge von ca. 25.000 Nm³/h in Abhängigkeit vom Luftüberschuß die folgenden mittlere Werte:

| Versuch Nr. | Luftüberschuß Lambda | Staub in mg/Nm³ ohne Eindüsung | Staub in mg/Nm³ mit Eindüsung |
|---|---|---|---|
| 1 | 1,45 | 72,5 | |
| 2 | 1,45 | | 41,2 |
| 3 | 1,65 | 35,8 | |
| 4 | 1,65 | | 21,8 |
| 5 | 1,60 | 47,3 | |
| 6 | 1,60 | | 27,5 |

Bei diesen Versuchen wurde in der Düse 18 ca. 300 l/h Wasser eingedüst. Durch diese Eindüsung konnte die Staubmenge im Abgas um ca. 40% reduziert werden. Sie lag in allen Fällen unter der von behördlichen Richtlinien vorgeschriebenen Grenze von 50 mg/Nm³.

Zur weiteren Verringerung der Staubabscheidung könnte gegebenenfalls auch die vom Sammelbehälter 7 für das Oxid kommende Leitung 20 in das erste Teilstück 21 der Leitung 11 eingebunden und somit ebenfalls aus diesem Abgasstrom der Staub durch die Eindüsung von Wasser verringert werden.

## Patentansprüche

1. Verfahren zur Abscheidung feinster Oxidteilchen bei der Regeneration von verbrauchten Beizsäuren mittels Pyrolyse, wobei im Abgasstrom eine Tropfenabscheidung vorgesehen ist und vor der Tropfenabscheidung eine Eindüsung von Wassertropfen und eine Anlagerung der Oxidteilchen an die Wassertropfen erfolgt wobei die Oxidteilchen gemeinsam mit den Wassertropfen abgeschieden werden, **dadurch gekennzeichnet, daß** die Wassertropfen eine Größe von kleiner 0,01 mm aufweisen und die Verweilzeit der Wassertropfen im Abgas mehr als 0,5 Sekunden, vorzugsweise mehr als 1 Sekunde beträgt.

2. Anlage zur Abscheidung feinster Oxidteilchen bei der Regeneration von verbrauchten Beizsäuren mit einem Pyrolysereaktor (4), zur Durchführung des Verfahrens nach Anspruch 1, wobei eine Abgasleitung (11) vorgesehen ist, die einen Tropfenabscheider (13) aufweist, **dadurch gekennzeichnet, dass** vor dem Tropfenabscheider (13) in der Abgasleitung (11) eine Düse (18) zur Eindüsung von Wassertropfen vorgesehen und die Düse (18) als Zweistoffdüse ausgebildet ist wobei der Tropfenabscheider (13) ein Venturiwäscher, eine Füllkörperkolonne oder ein alkalischer Füllkörperwäscher ist.

## Claims

1. Process for removing the very fine oxide particles that occur during regeneration of used pickling acids by means of pyrolysis, where elimination of water droplets is provided in the exhaust gas stream and water droplets are being sprayed in through nozzles before the droplets are eliminated, and where oxide particles settle down on the water droplets, with the oxide particles being eliminated together with the droplets, **characterized by** the water droplets being smaller than 0.01 mm and by the retention time of the water droplets in the exhaust gas being longer than 0.5 seconds, and preferably longer than 1 second.

2. Plant for removing the very fine oxide particles occurring during regeneration of spent pickling acids with a pyrolysis reactor (4) to carry out the process according to Claim 1, where an exhaust gas pipe (11) is provided which includes a droplet eliminator (13), **characterized by** a nozzle (18) being provided to spray in water droplets before the droplet eliminator (13) in the exhaust gas pipe (11) and the nozzle (18) being a two-component nozzle, and the droplet eliminator (13) being a Venturi washer, a packed column or an alkaline packed washer.

## Revendications

1. Procédé pour éliminer les particules d'oxydes très fines se produisant pendant la régénération d'acides de décapage usées moyennant la pyrolyse, où un pare-gouttelettes est prévu à la conduite de gaz résiduaire et où, avant l'élimination des gouttelettes d'eau, celles-ci se trouvent arrosées et une fixation des particules d'oxyde a lieu, l'élimination de ces particules d'oxyde ayant lieu ensemble avec les gouttelettes d'eau, **caractérisé en ce que** la taille des gouttelettes d'eau est inférieure à 0.01 mm et le temps de rétention des gouttelettes d'eau dans le gaz résiduaire est supérieur à 0.5 secondes, de préférence supérieur à 1 seconde.

2. Installation pour éliminer les particules d'oxyde très fines se produisant pendant la régénération d'acides de décapage usées moyennant un réacteur à pyrolyse (4) pour effectuer le procédé selon la revendication 1, où une conduite de gaz résiduaire (11) est prévue qui contient un pare-gouttelettes (13), **caractérisée en ce qu'**une buse (18) est prévue en amont du pare-gouttelettes (13) à la conduite de gaz résiduaire (11) et la buse (18) est une buse binaire, le pare-gouttelettes (13) étant un laveur à Venturi, une colonne à garnissage ou bien un laveur à garnissage alcalin.
